# EUROPEAN PATENT APPLICATION

(11) **EP 4 438 572 A1**
(43) Date of publication of application: **02.10.2024**
(21) Application number: 24159290.6
(22) Date of filing: 23.02.2024
(51) Int. Cl.: C03C 17/00, C03C 17/32, C09D 129/04, C09D 133/06

(54) **FORMULATIONS FOR APPLYING A HYDROPHILIC FILM TO A SUBSTRATE**

(30) Priority: 02.03.2023 US 202363449416 P; 01.02.2024 US 202418429730
(71) Applicant: Illinois Tool Works Inc., Glenview IL 60025 (US)
(72) Inventor: YANG, Guozhen, Glenview, 60025 (US)
(74) Representative: HGF

(57) **Abstract**

A hydrophilic film forming composition is provided that includes a hydrophilic polymer based microemulsion. A surface tension reducing substance is also present. Water is provided as a solvent in which the microemulsion and the surface tension reducing substance are dissolved.

A hydrophilic film forming composition is also provided that includes a hydrophilic polymer based microemulsion present in an amount of 5 to 45 total weight percent of the composition, and a surface tension reducing substance present in an amount of 5 to 15 total weight percent of the composition. An optional additive of at least one of a wetting agent, a dye, a bitterant, a defoamer, a light stabilizer, and a corrosion inhibitor may be present. The remainder of the composition is water. A process for applying a hydrophilic film to a substrate is also provided.

## Description

### RELATED APPLICATIONS

This application is a non-provisional application that claims priority benefit of US Provisional Application Serial Number 63/449,416 filed March 2, 2023; the contents of which are hereby incorporated by reference.

### FIELD OF THE INVENTION

The present invention in general relates to a composition for rendering a glass surface hydrophilic and a process for the use thereof and in particular, to such a composition amenable to application to a variety of substrates in field operation with minimal re-formulation yet still able to impart the desired hydrophilicity to the treated substrates.

### BACKGROUND OF THE INVENTION

Automotive glass is exposed to everyday environmental and various traveling conditions. Fallout of dirt particulates, rain, snow, and bug impact, all contribute to soiling the automotive glass. These conditions affect both visual appearance and driving visibility.

Currently, the visual appearance and visibility through glass substrates are protected and enhanced by application of a hydrophobic treatment to the glass substrate surface to repel water therefrom. Such hydrophobic treatments typically improve visibility temporarily; however, water still beads on the treated substrate surface and therefore still interfere to some extent with visibility. Water beads with a generally hemispherical shape act as lens that can obscure driver vision. Additionally, upon the drying of these water beads, a residue remains on the substrate that is often derived from solutes or suspended substances associated with the water beads, This residue degrades both the visual appearance of, and the visibility through the glass substrate.

Thus, there exists a need for a treatment for glass substrates that enhances both visual appearance and driving visibility therein by minimizing water beading and water residue upon drying.

### SUMMARY OF THE INVENTON

A hydrophilic film forming composition is provided that includes a hydrophilic polymer based microemulsion. A surface tension reducing substance is also present. Water is provided as a solvent in which the microemulsion and the surface tension reducing substance are dissolved.

A hydrophilic film forming composition is also provided that includes a hydrophilic polymer based microemulsion present in an amount of 5 to 45 total weight percent of the composition, and a surface tension reducing substance present in an amount of 5 to 15 total weight percent of the composition. An optional additive of at least one of a wetting agent, a dye, a bitterant, a defoamer, a light stabilizer, and a corrosion inhibitor may be present. The remainder of the composition is water.

A process for applying a hydrophilic film to a substrate is also provided that includes the application of a hydrophilic film forming composition to the substrate. The applied composition is then wiped along the surface to form the film.

### DETAILED DESCRIPTION OF THE PREFERRED EMBODIMENTS

The present invention has utility as treatment formulation for glass substrates to enhance visual appearance and visibility therethrough even when wetted. The inventive treatment formulation is counterintuitive to the art in that it forms a film on a substrate to render the underlying substrate hydrophilic. The present invention has the attribute of being amenable to application as a wipe-on or spray applied composition that forms a film without resort to the complex deposition processes that characterized prior art systems. As a result of the durability of the hydrophilic film imparted to a substrate by the inventive composition, the substrate needs to be cleaned less often. An inventive composition is also amenable to formulation independent of, and therefore devoid of volatile organic compounds (VOCs).

While the present invention is further detailed with respect to application to a glass substrate such as a vehicle window, building window, or mirrored surfaces, it is appreciated that an inventive composition is readily applied to numerous other substrates to impart hydrophilic films thereto. To the extent that an inventive composition is described herein with respect to total weight percentage of various components, these amounts are provided independent of propellants that are used in pressurized aerosol packages.

It is to be understood that in instances where a range of values are provided that the range is intended to encompass not only the end point values of the range but also intermediate values of the range as explicitly being included within the range and varying by the last significant figure of the range. By way of example, a recited range of from 1 to 4 is intended to include 1-2, 1-3, 2-4, 3-4, and 1-4.

As used herein weight percentage of a component refers to total weight percentage of fully solvated formulation, unless noted to the contrary.

According to embodiments, an inventive composition for forming a hydrophilic film on a glass substrate includes a hydrophilic polymer, a surface tension reducing miscible substance, and water. The formulation is provided as a liquid and is configured to be sprayed or wiped onto a glass substrate. Upon drying, a clear and transparent film is formed on the glass substrate to impart a hydrophilic coating thereto. The hydrophilic film cases water applied thereto to sheet instead of bead. The resulting water sheet is a generally uniform film of water that is clear and surprisingly provides better visibility relative to beaded water droplets, thereby enhancing visibility through the glass substrate. Furthermore, when the water sheet dries, an extremely limited amount of water residue remains on the glass substrate as compared to hydrophobic films where water beads are formed and leave water residue behind that degrade the visible appearance of and visibility through the glass substrate. As such, the present invention additionally enhances the visual appearance of and visibility through a glass substrate and requires less frequent cleaning as compared to available hydrophobic glass treatment compositions.

According to embodiments, an inventive composition for forming a hydrophilic film on a glass substrate includes a hydrophilic polymer present in an amount of 5 to 45 total weight percent of the composition, a surface tension reducing substance present in an amount of 5 to 15 total weight percent of the composition that is miscible with water, and a remainder of the composition being water. The components of the inventive composition are combined to form a microemulsion, which is capable of forming a hydrophilic film on a glass substrate. The hydrophilic polymer is not easily dissolved in water itself due to high molecule weight, yet the hydrophilic polymer can be emulsified and dispersed with a micro-scale or nano-scale in water by emulsifiers. The hydrophilic polymer contains moieties that have affinity for the glass substrate, such as windshield glass, to promote the adhesion of the hydrophilic polymer on the glass substrate. Meanwhile, the emulsifiers are readily washed off of the substrate by rinse water. Thus, the glass substrate is covered by a layer of hydrophilic polymers which is not easily dissolved in water and provide a higher surface energy for water sheeting. The resulting hydrophilic film causes water applied thereto to form a uniform sheet of water thereupon with a contact angle < 15 degrees.

According to certain inventive embodiments, the inventive composition is a storage stable dispersion, with the dispersed phase having small droplets ranging in size of less than a micron. Storage stability is defined herein as retaining the dispersion droplet size for at several months at 20 degrees Celsius in the dark and sealed in a bottle with 50% relative humidity (RH). In certain inventive embodiments, and for ease of formulation, hydrophilic polymer compounds are selected that self-emulsify in water. The loadings of the microemulsion are limited to maintain clear and transparent solutions as observed by a normal and unaided human eye. Transparency is an aesthetic aspect that enhances consumer acceptance of an inventive composition.

According to some inventive embodiments, the hydrophilic polymers of the contain charged functional groups, rendering them soluble in water. For example, hydrophilic polymer of the present invention include acrylics including acrylic acid, acrylamide, and maleic anhydride polymers and copolymers of any one or more of the aforementioned; amine-functional polymers including allylamine, ethyleneimine, oxazoline, and other polymers containing amine groups in their main chains or side chains; a natural hydrophilic polymer such as polysaccharides (e.g., dextran, alginate, chitosan, agarose, and pullulan) or proteins (e.g., albumin, gelatin, collagen, lectin, legumine, and viciline); polyacrylamides such as N-(2-Hydroxypropyl) methacrylamide (HPMA); poly([alkyl] acrylic acid)s, such as Poly(methacrylic acid) and Poly(acrylic acid); poly([meth]acrylate)s, such as poly(2-hydroxyethyl methacrylate) and poly(2-hydroxypropyl methacrylate) polyglycols, such as polyethylene glycol and polypropylene glycol; poly(styrene sulfonic acid) and its salt; poly(vinyl amide)s; poly(vinyl amine)s; poly(vinyl azines) ; poly(vinyl pyrrolidones) (PVP), including iodinized PVP; poly(n-vinyl imidazole, quaternized); poly(vinyl pyridine, quaternized); or a combination of any of the aforementioned. The solubility of the polymer is determined by titration at standard temperature and pressure (STP), while molecular weight is measured by gel permeation chromatography (GPC) to determine Mw, the weight averaged molecular weight.

The hydrophilic polymer, the surface tension reducing substance and any optional additives, if present, are dissolved in water. The surface tension reducing substance reduces the surface tension of the formulation relative to a formulation lacking the surface tension reducing substance and replaced by additional water on a percentage basis. Surface tension reducing substances operative herein illustratively include at least one of acetone; urea; C₁-C₆ alkyl or cycloalkyl alcohols such as isopropanol, or methanol; ethylene glycol monobutyl ether, propylene glycol; dipropylene glycol methyl ether; propylene glycol n-butyl ether and combinations thereof.

The surface tension reducing substance is typically present from 5 to 15 total weight percent and is miscible or dissolvable in the water solvent. The ability of the surface tension reducing substance to reduce the surface tension of water is well known to the art and promotes spreading on the glass substrate prior to solvent evaporation from the formulation to create a hydrophilic film. This is provided for the exemplary surface tension reducing substance of acetone, with the techniques detailed therein being applicable to other such substances operative herein: Wu, N.; Li, X.; Liu, S.; Zhang, M.; Ouyang, S. Effect of Hydrogen Bonding on the Surface Tension Properties of Binary Mixture (Acetone-Water) by Raman Spectroscopy. Appl. Sci. 2019, 9, 1235. Preferably, the surface tension reducing substance is VOC exempt. As used herein, "VOC" is defined as a compound listed on the United States Environmental Protection Agency Master List of Volatile Organic Compounds.

In some inventive embodiments, the present invention is limited to a three active component formulation of the hydrophilic polymer present in water with the surface tension reducing substance. It is appreciated that inactive optional additives can be included in this prototypical and highly effective invention without departing from the spirit of this closed form embodiment of the present invention.

In some embodiments of the present invention, a propellant is provided to afford a pressurized aerosol container for dispensing onto a target glass substrate. An inventive composition in some embodiments also contains a fluorocarbon or hydrocarbon propellant when aerosol delivery is desired. In other embodiments, inventive compositions are applied by consumers by a simple trigger spray or simply by sponging or wiping onto a target glass substrate.

An inventive composition optionally includes a halocarbon or hydrocarbon propellant in instances when an aerosol delivery system of an inventive composition is desired. Aerosol propellants operative herein illustratively include difluoroethane, trifluoroethane; alkanes such as butane, pentane, isobutane; propane; ethers such as dimethyl ether and diethyl ether; nitrogen; carbon dioxide; and combinations thereof. The resultant formulation inclusive of a propellant is sealed within a conventional metal aerosol canister and applied by spray application as is conventional to the art.

In certain embodiments of the invention, various additives enhance a property of an inventive composition; the property illustratively including storage stability, film formation, film durability and cleaning properties. Additives are provided such as a dye to modify the color of an inventive compostion, a bitterant such as a denatonium benzoate, light stabilizers, defoamer, corrosion inhibitors or combinations thereof. Each additive independently is typically in an inventive composition in an amount from 0 to 3 total weight percent, while in other specific embodiments, each is present from 0.01 to 0.5 total weight percent.

A defoaming agent is present in certain embodiment in an amount present to inhibit foaminess, if desired, and allow for smooth formation of a hydrophilic film produced from an inventive composition. Defoamer agents operative herein illustratively include silicone-based defoamers; mineral oil-based defoamers, and mixtures of foam destroying polymers and hydrophilic solids. Specific exemplary silicone-based defoamers illustratively include silica-filled polydimethyl siloxane and polyether-modified polysiloxanes.

A corrosion inhibitor operative herein illustratively includes sodium benzoate, triethanolamine dinonylnaphthalene, boric acid-triethanolamine salt, phosphoric acid-triethanolamine salt, ammonia, triethanolamine, capryloamphoprionate, and mixtures thereof.

An inventive composition is readily stored in glass, metal, or plastic containers made of plastics such as polyethylenes, polypropylenes, nylons, PVC, or PET, or aerosol cans or soaked wipe substrate.

An inventive composition is readily provided as a kit in the form of a bottle, wipe or aerosol canister. The bottle optionally equipped with a pump- or spray-trigger. With the provision of an optional wipe remove excess composition, along with instructions for doing so, an inventive kit is operational. The instructions providing details as how to prepare a substrate, apply the inventive composition, removal of excess from the substrate and the time and properties of the film so applied. The instructions can also provide details as to how the composition is re-applied after an applied film is worn.

The present invention is further detailed with respect to the following non-limiting examples that are provided to further illustrate the preparation of specific inventive compositions and certain attributes associated with the resulting films on substrates.

### COMPARATIVE EXAMPLE A

### Untreated Glass Substrate-Wet

An untreated vehicle windshield is sprayed with water to simulate a rainy drizzle. Water beads having a size of 0.062 ± 0.055 mm are formed on the vehicle windshield. Approximately 370 such water beads are formed per square inch of the vehicle windshield. The visibility for a driver sitting in the driver seat of the vehicle and looking through the wetted windshield is rated as poor with approximately a 30% visibility through the vehicle windshield as compared to the untreated vehicle windshield prior to being sprayed with the water to simulate a rainy drizzle.

### COMPARATIVE EXAMPLE B

### Untreated Glass Substrate-Dry

The wetted windshield of Comparative Example A is allowed time to dry naturally in a controlled environment having a temperature of 70 degrees Fahrenheit, a humidity of 30%, and free of wind or breezes. The water beads observed in Example 1 dry and evaporate. After three hours of drying time, it is observed that all of the water beads are gone, but water residue remains on the surface of the untreated vehicle windshield. Water residue spots having a size of 0.060 ± 0.028 mm are observed with approximately 60 such spots formed per square inch of the vehicle windshield. The visibility for a driver sitting in the driver seat of the vehicle and looking through the now dry but spotted windshield is rated as fair with approximately a 60% visibility through the vehicle windshield as compared to the untreated vehicle windshield prior to being sprayed with the water to simulate a rainy drizzle.

### COMPARATIVE EXAMPLE C

### Glass Substrate Treated With Hydrophilic film-Wet

A vehicle windshield, as used in Comparative Example A, is treated with an existing hydrophobic film treatment and time is allowed for the film to form. The vehicle windshield is sprayed with water to simulate a rainy drizzle, just as in surface tension reducing substance. Water film are formed on the vehicle windshield. No such water beads are formed per square inch of the vehicle windshield. The visibility for a driver sitting in the driver seat of the vehicle and looking through the wetted windshield is rated as good with approximately a 90% visibility through the vehicle windshield as compared to the untreated vehicle windshield prior to being sprayed with the water to simulate a rainy drizzle.

### COMPARATIVE EXAMPLE D

### Glass Substrate Treated With Hydrophobic film-Dry

The wetted windshield of Comparative Example C is allowed time to dry naturally in a controlled environment having a temperature of 70 degrees Fahrenheit, a humidity of 30%, and free of wind or breezes. The water beads observed in Comparative Example dry and evaporate. After three hours of drying time, it is observed that all of the water beads are gone, but water residue remains on the surface of the vehicle windshield treated with the hydrophobic film. No Water residue spots are observed. The visibility for a driver sitting in the driver seat of the vehicle and looking through the now dry but spotted windshield is rated as good with approximately a 100% visibility through the vehicle windshield as compared to the untreated vehicle windshield prior to being sprayed with the water to simulate a rainy drizzle.

### EXAMPLE 1

### Glass Substrate Treated With Hydrophilic film-Wet

A vehicle windshield, as used in Comparative Example A, is treated with an inventive hydrophilic film treatment that includes:

| Ingredients | Weight% |
|---|---|
| Polyacrylate solution | 10 |
| Acetone | 10 |
| Water | 80 |

The inventive composition is sprayed onto the vehicle windshield and wiped three times by the vehicle wiper blades to form the hydrophilic film. The vehicle windshield is sprayed with water to simulate a rainy drizzle, just as in Examples A and C. Good wetting of the windshield is observed without beads forming. Instead, a uniform sheet of water is observed over the surface of the treated vehicle windshield. In fact, a uniform layer of water on glass substrate is observed. The visibility for a driver sitting in the driver seat of the vehicle and looking through the wetted windshield is rated as excellent with approximately a 90% visibility through the vehicle windshield as compared to the untreated vehicle windshield prior to being sprayed with the water to simulate a rainy drizzle.

### EXAMPLE 2

### Glass Substrate Treated With Hydrophilic film-Dry

The wetted windshield of Example 1 is allowed time to dry naturally in a controlled environment having a temperature of 70 degrees Fahrenheit, a humidity of 30%, and free of wind or breezes. The uniform water sheet observed in Example 1 dries and evaporates. After three hours of drying time, it is observed that all of the water is gone, and no water residue remains on the surface of the vehicle windshield treated with the hydrophobic film. The visibility for a driver sitting in the driver seat of the vehicle and looking through the now dry windshield is rated as excellent with approximately a 100% visibility through the vehicle windshield as compared to the untreated vehicle windshield prior to being sprayed with the water to simulate a rainy drizzle.

### EXAMPLE 3

### Glass Substrate Treated With Hydrophilic film-Wet

A vehicle windshield, as used in Example A, is treated with an inventive hydrophilic film treatment that includes:

| Ingredients | Weight% |
|---|---|
| Polyvinyl alcohol solution | 38 |
| Urea | 12 |
| Water | 50 |

The inventive composition is sprayed onto the vehicle windshield and wiped three times by the vehicle wiper blades to form the hydrophilic film. The vehicle windshield is sprayed with water to simulate a rainy drizzle, just as in the Comparative Examples A and C. Good wetting of the windshield is observed without beads forming. Instead, a uniform sheet of water is observed over the surface of the treated vehicle windshield. In fact, a uniform layer of water on glass substrate is observed. The visibility for a driver sitting in the driver seat of the vehicle and looking through the wetted windshield is rated as excellent with approximately a 90% visibility through the vehicle windshield as compared to the untreated vehicle windshield prior to being sprayed with the water to simulate a rainy drizzle.

### EXAMPLE 4

### Glass Substrate Treated With Hydrophilic film-Dry

The wetted windshield of Example 3 is allowed time to dry naturally in a controlled environment having a temperature of 70 degrees Fahrenheit, a humidity of 30%, and free of wind or breezes. The uniform water sheet observed in Example 3 dries and evaporates. After three hours of drying time, it is observed that all of the water is gone, and no water residue remains on the surface of the vehicle windshield treated with the hydrophobic film. The visibility for a driver sitting in the driver seat of the vehicle and looking through the now dry windshield is rated as excellent with approximately a 100% visibility through the vehicle windshield as compared to the untreated vehicle windshield prior to being sprayed with the water to simulate a rainy drizzle.

Patents and publications mention the specification are indicative of the levels of those skilled in the art to which the invention pertains. These patents and publications are incorporated herein by reference to the same extent as if each individual patent or publication was specifically and individually incorporated herein by reference.

The forgoing description is illustrative of particular embodiments of the invention, but is not meant to be a limitation upon the practice thereof. The following
claims, including all equivalents thereof are intended to define the scope of the invention.
Certain embodiments of the invention are described in the following clauses:
Clause 1. A hydrophilic film forming composition comprising:
   a hydrophilic polymer based microemulsion;
   a surface tension reducing substance; and
   water as a solvent in which said microemulsion and said surface tension reducing substance are dissolved.
Clause 2. The composition of clause 1 wherein said hydrophilic polymer self emulsifies in said water.
Clause 3. The composition of clause 1 wherein said hydrophilic polymer is present in an amount of 5 to 45 total weight percent.
Clause 4. The composition of clause 1 wherein said hydrophilic polymer is polyacrylate, polyvinyl alcohol, or a combination thereof.
Clause 5. The composition of clause 1 wherein said surface tension reducing substance is present in an amount of 5 to 15 total weight percent.
Clause 6. The composition of clause 1 wherein said surface tension reducing substance is at least one of acetone; urea; C₁-C₆ alkyl or cycloalkyl alcohols such as isopropanol, or methanol; ethylene glycol monobutyl ether, propylene glycol; dipropylene glycol methyl ether; propylene glycol n-butyl ether,and combinations thereof.
Clause 7. The composition of clause 1 wherein said water is present in an amount of between 5 and 90 total weight percent.
Clause 8. The composition of clause 1 further comprising at least one additive of a dye, a biocide, a defoamer, a light stabilizer, and a corrosion inhibitor.
Clause 9. The composition of clause 1, wherein said composition is devoid of volatile organic compounds (VOCs).
Clause 10. A hydrophilic film forming composition consisting essentially of:
   a hydrophilic polymer based microemulsion present in an amount of 5 to 45 total weight percent of the composition;
   a surface tension reducing substance present in an amount of 5 to 15 total weight percent of the composition; and
   an optional additive of at least one of a wetting agent, a dye, a bitterant, a defoamer, a light stabilizer, and a corrosion inhibitor; and
   a remainder of said composition being water.
Clause 11. A process for applying a hydrophilic film to a substrate, the process comprising:
   applying the composition of clause 1 to the substrate; and
   wiping the applied composition along the surface to form the film.
Clause 12. The process of clause 11 wherein applying is with a spray or a soaked wipe.
Clause 13. The process of clause 12 wherein the spray is from a bottle that contains the composition.
Clause 14. The process of clause 13 wherein the spray is from a windshield washer spray mechanism of a vehicle.
Clause 15. The process of clause 11 wherein wiping the applied composition is with a cloth.
Clause 16. The process of clause 11 wherein wiping the applied composition is with windshield wipers of a vehicle.

## Claims

1. A hydrophilic film forming composition comprising:
a hydrophilic polymer based microemulsion;
a surface tension reducing substance; and
water as a solvent in which said microemulsion and said surface tension reducing substance are dissolved.

2. The composition of claim 1 wherein said hydrophilic polymer self emulsifies in said water.

3. The composition of claim 1 wherein said hydrophilic polymer is present in an amount of 5 to 45 total weight percent.

4. The composition of claim 1 wherein said hydrophilic polymer is polyacrylate, polyvinyl alcohol, or a combination thereof.

5. The composition of claim 1 wherein said surface tension reducing substance is present in an amount of 5 to 15 total weight percent.

6. The composition of claim 1 wherein said surface tension reducing substance is at least one of acetone; urea; C₁-C₆ alkyl or cycloalkyl alcohols such as isopropanol, or methanol; ethylene glycol monobutyl ether, propylene glycol; dipropylene glycol methyl ether; propylene glycol n-butyl ether,and combinations thereof.

7. The composition of claim 1 wherein said water is present in an amount of between 5 and 90 total weight percent.

8. The composition of claim 1 further comprising at least one additive of a dye, a biocide, a defoamer, a light stabilizer, and a corrosion inhibitor.

9. The composition of claim 1, wherein said composition is devoid of volatile organic compounds (VOCs).

10. A hydrophilic film forming composition consisting essentially of:
a hydrophilic polymer based microemulsion present in an amount of 5 to 45 total weight percent of the composition;
a surface tension reducing substance present in an amount of 5 to 15 total weight percent of the composition; and
an optional additive of at least one of a wetting agent, a dye, a bitterant, a defoamer, a light stabilizer, and a corrosion inhibitor; and
a remainder of said composition being water.

11. A process for applying a hydrophilic film to a substrate, the process comprising:
applying the composition of claim 1 to the substrate; and
wiping the applied composition along the surface to form the film.

12. The process of claim 11 wherein applying is with a spray or a soaked wipe.

13. The process of claim 12 wherein the spray is from a bottle that contains the composition, and optionally wherein the spray is from a windshield washer spray mechanism of a vehicle.

14. The process of claim 11 wherein wiping the applied composition is with a cloth.

15. The process of claim 11 wherein wiping the applied composition is with windshield wipers of a vehicle.
